# EUROPEAN PATENT SPECIFICATION

(11) **EP 2 536 258 B1**
(45) Date of publication and mention of the grant of the patent: **08.08.2018**
(21) Application number: 12167158.0
(22) Date of filing: 08.05.2012
(51) Int. Cl.: H05B 37/02

(54) **Illumination control system**
Beleuchtungssteuersystem
Système de contrôle d'éclairage

(30) Priority: 16.06.2011 JP 2011134409
(43) Date of publication of application: 19.12.2012
(73) Proprietor: Panasonic Intellectual Property Management Co., Ltd., Osaka-shi, Osaka 540-6207 (JP)
(72) Inventor: Nanahara, Atuo, Chuo-ku, Osaka-shi (JP); Matsuda, Sinji, Narasino, Chiba (JP)
(74) Representative: Rüger, Barthelt & Abel

(56) References cited:
- EP-A1- 2 312 524
- WO-A1-2011/091868
- WO-A2-2010/010493
- US-A1- 2007 185 675
- US-A1- 2011 115 910

## Description

### [Field of the Invention]

The present invention relates to an illumination control system.

### [Background Art]

There has been provided an illumination control system that utilizes human sensing and brightness sensing techniques based on an image sensor such as a CCD or a CMOS (see, for example, JPA 2002-289377, paragraphs [0034] to [0038], and Figs. 1 to 3). The illumination control system is configured to have: a TV camera as a brightness detecting sensor; a calculation control device including a PC terminal and the like; and a plurality of illumination fixtures each having a light source of which an optical output is automatically controlled by a lighting control signal that is outputted on the basis of image data inputted to the calculation control device.

In the illumination control system, the TV camera is used to image an illuminated space; then an imaged image is divided into a plurality of areas; and the presence or absence of a person is detected for each of the division areas to perform illumination control.

### [Conventional Technique Document]

US 2007/0185675 A1 shows a system, which detects, whether a person is present in a working area. If a person is present the light is turned on, otherwise the light is turned off. Two photo sensors can be provided to measure the illuminance in the work area. One photo sensor is used to measure the illuminance in a section of the work area which is also lighted by day light through the window. The other photo sensor measures the illuminance in an area not affected by the day light. The light sources of the illumination device can be adjusted so that a desired illumination is achieved.

The method and the system according to WO 2010/010493 A2 propose to use a motion detector connected to a luminaire. The luminaire is switched on if the presence of a person is detected. In this case an event signal is submitted to the neighbouring luminaires so that they can be also switched to a predefined dimming level. When the event signal is submitted a time sequence starts. If during the time sequence no further event signal is received the neighbouring luminaires are turned off again.

Another control for an illumination device is disclosed in EP 2 312 524 A1. A camera is used to detect a specific area or room. Not only the presence, but also the moving direction of a person is determined. The lights in the moving direction can thus be turned on and the lights in the opposite direction can be turn off.

A system and method of detecting occupants in a building is described in US 2011/0115910 A1. An occupancy sensor is provided to detect whether a person is present in a specific area. The lighting of the area is controlled depending on occupancy. The occupancy sensor contains an image sensor positioned in a corner of a room. A typical human profile is stored and the image is processed by an image processing method to determine the presence of a person in the room. The processed image is subsequently compared with a reference image in order to determine the dimensional difference of the human profile in the processed image with the stored reference image. This determination is necessary to calculate the distance of the person from the image sensor. The distance of the identified person in the processed image from predetermined corners of the room is used to finally calculate the position of the person in the room. However this method requires large computing resources. The accuracy highly depends on the image processing methods. The lower the resolution of the image is, the more difficult is an exact calculation of the position of the person in the room. This position is however necessary for switching the lighting of the room.

### [Disclosure of the Invention]

### [Problems to be solved by the Invention]

The above-described illumination system disclosed in JPA 2002-289377 is one that detects the presence or absence of a person for each of the division areas to perform illumination control; however, between each of the division areas and an illumination range of each of the illumination fixtures, there is no relevance, and therefore the illumination control system cannot necessarily achieve an optimum illumination environment.

The present invention is made in consideration of the above problem, and has an object to provide an illumination control system that can achieve an optimum illumination environment.

### [Means adapted to solve the Problems]

An illumination control system of the present invention is provided with: a plurality of illumination fixtures each having a specific address, the plurality of illumination fixtures being able to individually undergo dimming control according to an external lighting control signal; and an illumination control terminal that has an imaging element and sets an imaging range so as to include illumination ranges of the plurality of illumination fixtures, wherein the illumination control terminal divides an imaged image by the imaging element into a plurality of areas with respectively relating the plurality of areas to the illumination ranges of the illumination fixtures; on the basis of the imaged image, determines whether or not a person is present; upon detection of a person, determines a division area where the person is present; and performs the dimming control of an illumination fixture corresponding to the division area.

In the illumination control system, preferably, the illumination control terminal sets, as an overlap area, an area where the illumination ranges of the plurality of illumination fixtures overlap, the overlap area being different from the division areas.

Further, in the illumination control system the illumination control terminal has a function of measuring illumination intensity distribution of the imaged image for each of the division areas; upon detection of a person, calculates average illumination intensities respectively in the remaining division areas excluding the division area where the person is present; and performs feedback control of the respective illumination fixtures such that the average illumination intensities respectively become equal to preliminarily set target values.

### [Effects of the Invention]

There is an effect of being able to provide an illumination control system that can achieve an optimum illumination environment.

### [Brief Description of the Drawings]

[Fig. 1] Fig. 1 illustrates an illumination control system of the present embodiment, in which (a) is a schematic configuration diagram and (b) is a layout chart.
[Fig. 2] Fig. 2 (a) is a block diagram of an illumination fixture constituting the above-described illumination control system, and (b) is a block diagram of an illumination control terminal constituting the above-described illumination device.
[Fig. 3] Figs. 3 (a) to (c) are explanatory diagrams for explaining a differential image used in the above-described illumination control system.
[Fig. 4] Fig. 4 is an explanatory diagram for explaining operation of detecting a position of an entering person in the above-described illumination control system.
[Fig. 5] Figs. 5 (a) and (b) are explanatory diagrams for explaining operation of the above-described illumination control system.
[Fig. 6] Figs. 6 (a) and (b) are other explanatory diagrams for explaining the operation of the above-described illumination control system.

### [Best Mode for Carrying Out the Invention]

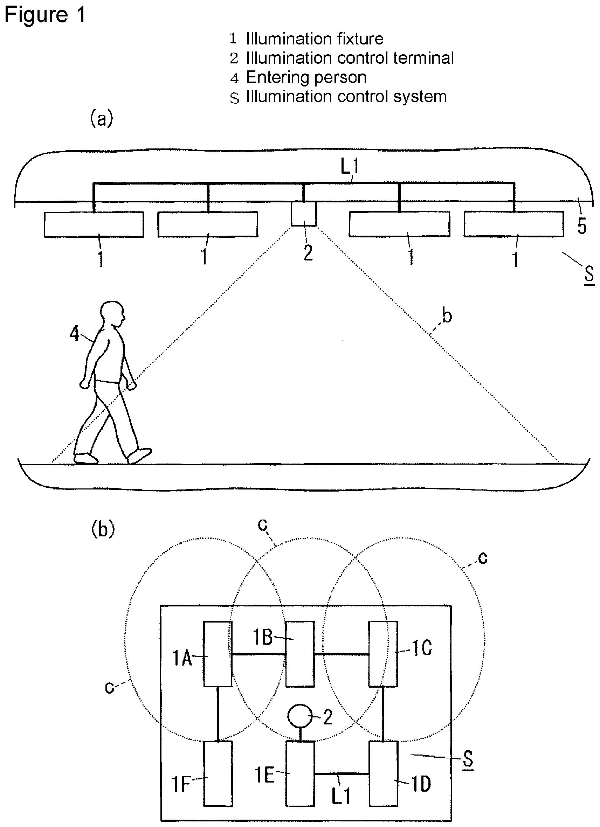

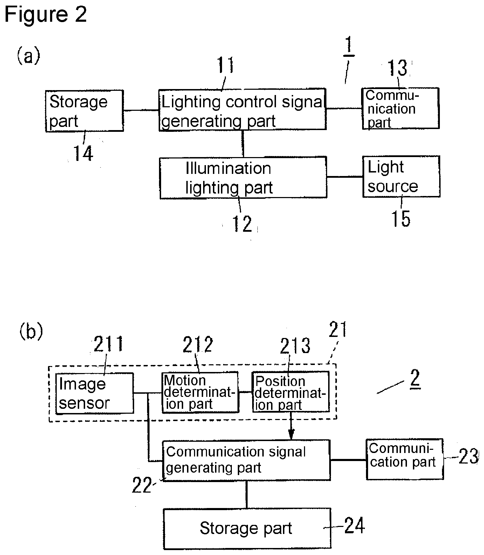

In the following, an embodiment of an illumination control system is described on the basis of Figs. 1 to 6. An illumination control system S of the present embodiment is, as illustrated in Figs. 1 (a) and (b), a system that is placed on a ceiling 5, and detects an entering person 4 having entered a sensing area b of an image sensor 211 (see Fig. 2 (b)) provided by an illumination control terminal 2 to automatically light illumination fixtures 1.

The illumination control system S of the present embodiment is provided with: the plurality of (six in Fig. 1 (b)) illumination fixtures 1; and the illumination control terminal 2 that is connected to the illumination fixtures 1 through a communication line L1. Note that if in the following description, it is necessary to distinguish the respective illumination fixtures 1 from one another they are denoted by illumination fixtures 1A to 1F to thereby make the distinction.

Fig. 2 (a) is a block diagram of each of the illumination fixtures 1, and each of the illumination fixtures 1 is provided with, as main components, a lighting control signal generating part 11, an illumination lighting part 12, a communication part 13, a storage part 14, and a light source 15.

The lighting control signal generating part 11 includes a processor such as a microcomputer or a DSP, and has a function of generating a lighting control signal on the basis of a communication signal that has been received from the illumination control terminal 2 through the communication part 13. Further, the lighting control signal generating part 11 has also a function of determining whether or not an address included in the communication signal from the illumination control terminal 2 coincides with an address preliminarily set for the lighting control signal generating part 11 itself.

The illumination lighting part 12 has a function of performing dimmed lighting of the light source 15 on the basis of the lighting control signal generated in the lighting control signal generating part 11.

The communication part 13 has a function of communicating with a communication part 23 of the illumination control terminal 2 through the communication line L1 one by one. Note that the communication by the communication part 13 is not limited to the wired communication using the communication line L1, but may be power line communication, wireless communication, or the like if each of the illumination fixtures 1 and the illumination control terminal 2 are adapted to be able to communicate with each other one by one.

The storage part 14 includes a nonvolatile device such as an EEPROM or FlashRom, and stores a specific address assigned to each of the illumination fixtures 1.

The light source 15 includes, for example, an LED (light emitting diode), in which lighting or extinction is performed, or dimming level is adjusted on the basis of dimming control by the illumination lighting part 12. Note that a method for performing the dimming control of the light source 15 to light the light source 15 at a desired brightness level is based on a conventionally well-known technique, and therefore detailed description thereof is omitted.

Fig. 2 (b) is a block diagram of the illumination control terminal 2, and the illumination control terminal 2 is provided with, as main components, a sensor part 21, a communication signal generating part 22, a communication part 23, and a storage part 24.

The sensor part 21 is configured to have an image sensor 211, a motion determination part 212, and a position determination part 213, and has functions of detecting the presence or absence of an entering person 4 and also determining a position of the detected entering person 4 in an image.

The image sensor 211 is provided with an imaging element (not illustrated) such as a CMOS (Complementary Metal Oxide Semiconductor) sensor; converts an analog signal outputted from the imaging element to a digital signal; and forms the digital signal into image data (imaged image) to output it to the motion determination part 212. The image sensor 211 sets, as an imaging area, an entire room in which the illumination control system S is installed, and upon request of the motion determination part 212, images the imaging area to output generated image data to the motion determination part 212. In addition, the image sensor 211 of the present embodiment images the imaging area once per approximately one-thirtieth seconds, and outputs corresponding image data to the motion determination part 212.

The motion determination part 212 and the position determination part 213 respectively include processors such as DSPs, and in the motion determination part 212, motion of an entering person 4 is detected, whereas in the position determination part 213, a position of the entering person 4 having made the motion in an image is specified. In addition, operations of the motion determination part 212 and position determination part 213 are described later.

The communication part 23 has a function of communicating with the communication part 13 of each of the illumination fixtures 1 through the communication line L1 one by one. Note that the communication by the communication part 23 is also not limited to the wired communication using the communication line L1, but may be power line communication, wireless communication, or the like if each of the illumination fixtures 1 and the illumination control terminal 2 are adapted to be able to communicate with each other one by one.

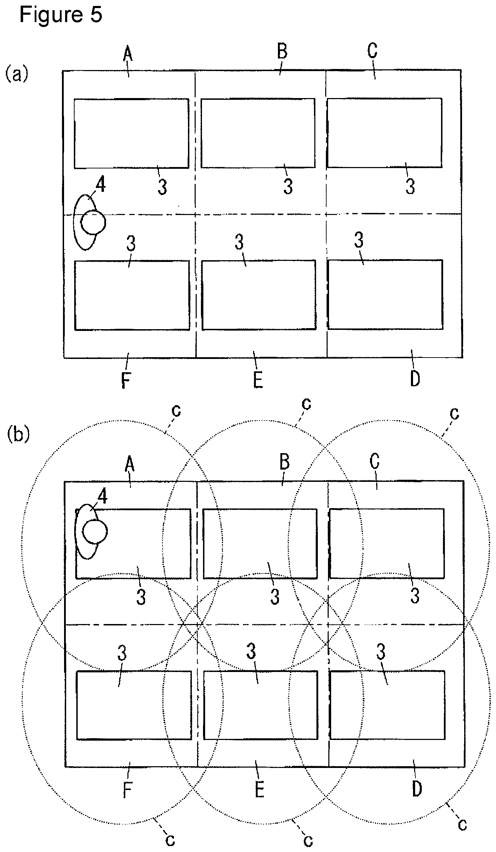

The storage part 24 includes a nonvolatile device such as an EEPROM or FlashRom, and stores the specific addresses assigned to the respective illumination fixtures 1 and after-mentioned illumination areas (division areas) A to F of an imaged image (see Fig. 5) with relating the specific addresses to the illumination areas A to F respectively.

The communication signal generating part 22 includes a processor such as a microcomputer or a DSP, and from information on coordinates in an image, which is sent from the position determination part 213, and the above-described pieces of information stored in the storage part 24, obtains an address of an illumination fixture 1 related to the coordinates. Also, the communication signal generating part 22 generates a communication signal including a control signal for performing the dimming control of the illumination fixture 1 and the above address, and transmits the communication signal to the respective illumination fixtures 1 through the communication part 23.

On the other hand, in each of the illumination fixtures 1, upon receipt of the above communication signal through the communication part 13, the lighting control signal generating part 11 compares the address included in the above communication signal with an address of the illumination fixture 1 itself, and if the both addresses coincide with each other, generates a lighting control signal on the basis of the control signal included in the above communication signal. Then, the lighting control signal generating part 11 outputs the lighting control signal to the illumination lighting part 12, and the illumination lighting part 12 lights the light source 15 at a dimming level corresponding to the lighting control signal. On the other hand, if the both addresses do not coincide with each other, the lighting control signal generating part 11 discards the above communication signal.

Fig. 1 (b) is a layout chart of the illumination fixtures 1A to 1F and illumination control terminal 2 that constitute the illumination control system S, and around the illumination control terminal 2, the six illumination fixtures 1A to 1F are arranged at regular intervals. In addition, c indicated in Fig. 1 (b) represents an illumination range of each of the illumination fixtures 1, and in the present embodiment, in order to prevent a non-illumination area from being formed, illumination ranges c and c of adjacent illumination fixtures 1 and 1 are overlapped. Also, in Fig. 1 (b), only illumination areas c of the illumination fixtures 1A to 1C are illustrated; however, in practice, a similar illumination area c is set for any of the illumination fixtures 1A to 1F.

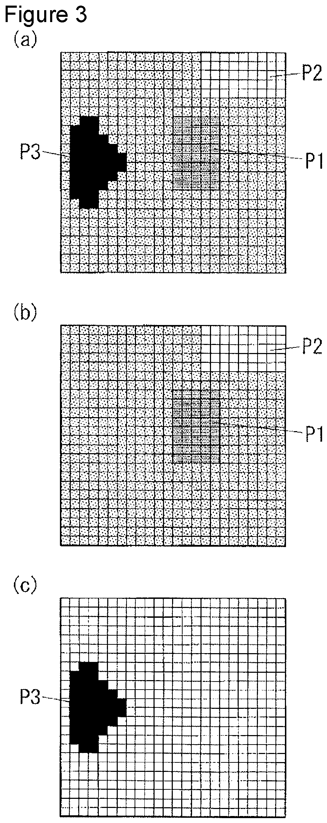

Next, the operation of the motion determination part 212 constituting the sensor part 21 of the illumination control terminal 2 is described on the basis of Fig. 3. Image data is sent from the image sensor 211 to the motion determination part 212 once per approximately one-thirtieth seconds; image data at a certain point is stored in a storage part (not illustrated) as image data representing a background image; and the image data is compared with image data sent from the image sensor 211 each time to thereby detect an object entering the room. Fig. 3 (b) illustrates image data representing a background image at a certain point (at a time point before an entering person 4 enters the room), and the image data includes pixel groups P1 and P2 corresponding to a desk and the like. Also, Fig. 3 (a) illustrates present image data sent from the image sensor 211, and the image data includes the pixel groups P1 and P2 corresponding to the desk and the like, and a pixel group P3 corresponding to the entering person 4. By binarizing a pixel-based difference between the present image data and the image data representing the background image, luminance signal values of pixels having no difference (including the pixel groups P1 and P2) between the present image data and the image data representing the background image become zero, and the luminance signal value of the pixel group P3 where the entering person 4 gives rise to the difference has a certain value. Finally, if the number of pixels included in the pixel group P3, or a size of the pixel group P3 exceeds a preliminarily set threshold value, the motion determination part 212 determines that the entering object is the entering person 4, and subsequently, the position determination part 213 in the subsequent stage determines a position of the entering person 4.

Methods for acquiring the image data representing the background image includes a method that updates present image data as data representing a background image each time in chronological order, a method that, at certain timing, acquires image data under an environment where the entering person 4 is surely absent, and always uses the image data as the data representing the background image, and other methods. However, in the case of the latter method in which the image data is always used as the data representing the background image, even if a stationary object other than the entering person 4 enters the room, the stationary object is detected, and therefore even though the entering person 4 is absent, the illumination fixtures 1 are continuously lit. Accordingly, it is preferable to update the image data representing the background image in chronological order and treat the stationary object other than the entering person 4 as a background.

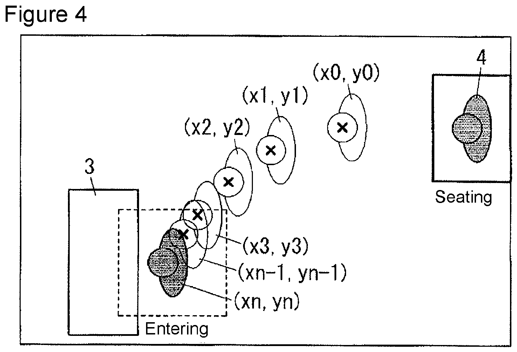

Next, the operation of the position determination part 213 constituting the sensor part 21 of the illumination control terminal 2 is described on the basis of Fig. 4. When the entering person 4 is detected by the motion determination part 212, the position determination part 213 obtains coordinates (x, y) of the pixel group P3 included in a differential image from the motion determination part 212 to store them in a storage part (not illustrated). For example, in the case where an imaged image by the image sensor 211 is a VGA image, the above coordinates can be defined as values corresponding to pixels, like (0, 0) to (639, 479). In addition, as the coordinates of the pixel group P3, it is preferable to use central coordinates of a detected body (in this example, the entering person 4).

In the example illustrated in Fig. 4, assuming that coordinates at a time point when the entering person 4 starts to move are (x0, y0), the entering person 4 moves forward to a desk 3 in the order of (x1, y1), (x2, y2), (x3, y3), ..., (xn-1, yn-1), and coordinates at a time point when the entering person 4 arrives at the desk 3 are (xn, yn). If a degree of the movement is large, a rate of coordinate change is large, and as the degree of the movement decreases, the rate of coordinate change decreases, so that if the rate of coordinate change between frames (imaged images) within a preliminarily set certain time period is equal to or less than a certain value, it is determined that the entering person 4 is stationary, and corresponding coordinates are stored as position coordinates.

Meanwhile, in the illumination control terminal 2 of the present embodiment, an imaged image imaged by the image sensor 211 is divided into the plurality of (six in Fig. 5 (a)) illumination areas (division areas) A to F such that the illumination areas A to F respectively correspond to the illumination ranges c of the illumination fixtures 1A to 1F, and in a state where the illumination ranges C of the respective illumination fixtures 1A to 1F are overlapped, as illustrated in Fig. 5 (b), the illumination areas A to F are respectively brought into states of being included in the illumination ranges c of the corresponding illumination fixtures 1A to 1F. Also, in the present embodiment, the address of the illumination fixture 1A and coordinate information on the illumination area A, the address of the illumination fixture 1B and coordinate information of the illumination area B ... are stored in the storage part 24 so as to respectively relate the addresses to the pieces of coordinate information.

Next, operation of the illumination control system S is described referring to Figs. 1 and 5. First, in a state where an entering person 4 is absent in the room, all of the illumination fixtures 1A to 1F are in a stand-by state (extinction state or low power lighting state). When the entering person 4 is detected by the sensor part 21 of the illumination control terminal 2 and a position of the entering person 4 is determined, the communication signal generating part 22 obtains an address of a corresponding illumination fixture 1 on the basis of information on the above position and the pieces of stored information in the storage part 24, and generates a communication signal including the address and a control signal for performing the dimming control of the illumination fixture 1. For example, in the example illustrated in Fig. 5 (b), the entering person 4 is in the illumination area A, and therefore the above communication signal includes the address of the illumination fixture 1A. Then, the communication signal generating part 22 transmits the above communication signal to the respective illumination fixtures 1A to 1F through the communication part 23.

On the other hand, when in each of the illumination fixtures 1A to 1F, the communication part 13 receives the above communication signal, the lighting control signal generating part 11 compares the address included in the above communication signal and an address set for the illumination fixture 1 itself. As a result, if the both addresses coincide with each other, the lighting control signal generating part 11 receives the control signal included in the above communication signal, and generates a lighting control signal corresponding to the control signal. Then, when the lighting control signal generating part 11 outputs the lighting control signal to the illumination lighting part 12, the illumination lighting part 12 lights the light source 15 at a predetermined dimming level according to the lighting control signal. On the other hand, if the both addresses do not coincide with each other, the lighting control signal generating part 11 discards the above communication signal, and the light source 15 keeps the stand-by state. For example, in the example illustrated in Fig. 5 (b), only the light source 15 of the illumination fixture 1A lights at the predetermined dimming level, and the light sources 15 of the illumination fixtures 1B to 1F keep the stand-by state.

Next, when the entering person 4 exits the room, the entering person 4 is not detected in any of the illumination areas A to F, and therefore the communication signal generating part 22 transmits a control signal for restoring the illumination fixture 1A to the stand-by state together with the address of the illumination fixture 1A. Then, when the illumination fixture 1A receives a communication signal including the above control signal, the lighting control signal generating part 11 generates a lighting control signal for restoring the light source 15 to the stand-by state according to the above control signal, and according to the lighting control signal, the light source 15 is restored to the stand-by state.

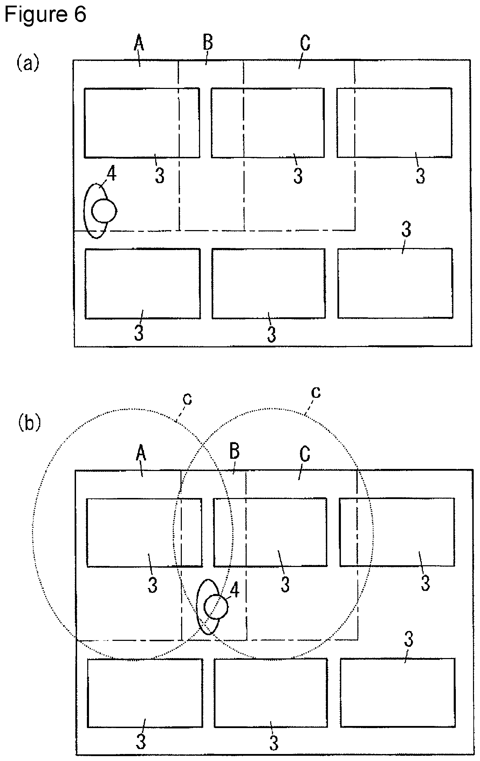

Also, as illustrated in Figs. 6 (a) and (b), an area where the illumination ranges c and c of the adjacent illumination fixtures 1A and 1B overlap with each other is preferably set as an illumination area (overlap area) that is different from the above-described illumination areas (division areas) A to F. In the example illustrated in Figs. 6 (a) and (b), the illumination area illuminated only by the illumination fixture 1A, the illumination area illuminated only by the illumination fixture 1B, and the illumination area (overlap area) illuminated by both of the illumination fixtures 1A and 1B are respectively set as A, C, and B. If the entering person 4 is in the illumination area B, the communication signal generating part 22 of the illumination control terminal 2 selects the addresses corresponding to the illumination fixtures 1A and 1B as the address including in the above communication signal, and transmits them to the respective illumination fixtures 1A to 1F together with a control signal for performing dimmed lighting of the light sources 15 through the communication part 23.

On the other hand, the above communication signal transmitted from the illumination control terminal 2 includes the addresses of the illumination fixtures 1A and 1B, so that in the illumination fixtures 1C to 1F, the above communication signal is discards, and the light sources 15 keep the stand-by state. Also, in the illumination fixtures 1A and 1B, according to the control signal included in the above communication signal, the light sources 15 light at the predetermined dimming level. Note that, in Figs. 6(a) and (b), the overlap area (illumination area B in Figs. 6 (a) and (b)) between the illumination ranges c and c by the two illumination fixtures 1A and 1B is described; however, in practice, the six illumination fixtures 1A to 1F are placed, and an overlap area between illumination ranges c by any adjacent two of the illumination fixtures 1A to 1F is also set as an illumination area that is different from the above illumination areas (division areas) A to F.

Further, the illumination control terminal 2 may be provided with a function of measuring illumination intensity distribution of an imaged image by the image sensor 211 for each of the illumination areas (division areas) A to F, and the respective illumination fixtures 1A to 1F may be feedback controlled such that average illumination intensities by the illumination fixtures 1A to 1F respectively become equal to preliminarily set target values. For example, in the example illustrated in Fig. 5 (b), regarding the illumination area A, the light source 15 is lit at the predetermined dimming level; however, regarding the remaining illumination areas B to F other than the illumination area A, the illumination fixtures 1B to 1F are feedback controlled such that the average illumination intensities by the illumination fixtures 1B to 1F respectively become equal to the preliminarily set target values. In addition, the above target values may be set to lower dimming levels than the predetermined dimming level set for an illumination area where the entering person 4 is detected, or the above target values may be different values respectively for the illumination areas A to F, or the same value.

Thus, according to the present embodiment, if an entering person 4 is detected in an image imaged by the image sensor 211, a division area where the entering person 4 is present (in the example illustrated in Fig. 5 (b), the illumination area A) is determined, and only the determined division area is targeted for brightness detection, so that an illumination environment having a certain illumination intensity with high accuracy can be provided to the entering person 4 present in the division area. Also, regarding the rest of the division areas, by extinguishing or lighting with low power corresponding illumination fixtures 1, energy saving can be achieved.

Further, as illustrated in Fig. 6, if the entering person 4 is present in the illumination area B where the illumination ranges c and c by the adjacent illumination fixtures 1A and 1B overlap with each other, dimmed lighting is performed on both of the illumination fixtures 1A and 1B, and therefore an illumination environment having sufficient illumination intensity can be provided to the illumination area B. Also, regarding the remaining illumination areas B to F excluding the illumination area A where the entering person 4 is detected, by performing the feedback control of the respective illumination fixtures 1B to 1F such that measured average illumination intensities respectively become equal to the preliminarily set target values, dimming control at illumination intensity set for each of the illumination areas B to F can be performed. Further, timing to perform the dimming control of each of the illumination fixtures 1A to 1F can be variously considered; however, by performing the dimming control depending on the presence or absence of the entering person 4, a large effect can be expected from the perspective of energy saving.

Also, if a plurality of entering persons 4 are present in any of the illumination areas A to F, by performing constant brightness control on the basis of an entering person 4 who is most insufficient in brightness, an illumination environment suitable for work can be provided to all of the entering persons 4. Further, if a plurality of entering persons 4 are present in any of the illumination areas A to F, by averaging brightness indices around the respective entering persons 4, an illumination environment that balances between ensuring illumination for the respective entering persons 4 and energy saving can be provided. Also, by using the sensor part 21 to specify an illumination area where an entering person 4 is present, and then specifying a position of the entering person 4 without a break, a moving range of the entering person 4 can be specified to a more limited extent, and as a result, a more preferable illumination environment can be provided.

Note that the number of the illumination fixtures 1 is not limited to that in the present embodiment, but only required to be two or more. Also, the number of divisions in an imaged image by the image sensor 211 is also only required to be appropriately set according to the number of the illumination fixtures 1.

### [Description of Reference Numerals]

1: Illumination fixture
2: Illumination control terminal
4: Entering person (person)
S: Illumination control system

## Claims

1. An illumination control system (S) comprising:
a plurality of illumination fixtures (1, 1A to 1F) each having a specific address, the plurality of illumination fixtures being able to individually undergo dimming control according to an external lighting control signal; and
an illumination control terminal (2) that has an imaging element (211) and sets an imaging range (b) so as to include illumination ranges of the plurality of illumination fixtures (1, 1A to 1F), wherein
the illumination control terminal (2) is adapted to
- divide an imaged image by the imaging element (211) into a plurality of areas (A to F) with respectively relating the plurality of areas to the illumination ranges (c) of the illumination fixtures (1, 1A to 1F);
- determine whether or not a person (4) is present on a basis of the imaged image,;
- determine a division area (A to F) where the person is present upon detection of a person; and
- perform the dimming control of an illumination fixture (1, 1A to 1F) corresponding to the division area (A to F);
**characterized in that**
the illumination control terminal (2) with the imaging element (211) is placed on a ceiling of a room and the imaging element (211) is adapted to image the imaged area in a top view;
the illumination control terminal (2) contains a motion determination part (212) that is adapted to determine a pixel group (P3) representing a person (4) entering the room based on a differential image that is a pixel based difference of a between image data of a background image and actual image data sent from the image sensor (211), and that is further adapted to update the background image periodically in given time intervals;
the illumination control terminal (2) contains a position determination part (213) that is adapted to determine the coordinates of the pixel group (P3) representing the entering person (4) in the differential image and to determine that the person (4) is stationary if within a set time period the coordinate change is less than or equal to a specific value;
the illumination control terminal (2) is adapted to provide a function of measuring illumination intensity distribution of the imaged image for each of the division areas (A to F); upon detection of a person (4), calculates average illumination intensities respectively in the remaining division areas (A to F) excluding the division area where the person is present (4); and performs feedback control of the respective illumination fixtures (1, 1A to 1F) such that the average illumination intensities respectively become equal to preliminarily set target values.

2. The illumination control system according to claim 1, wherein
the illumination control terminal (2) sets, as an overlap area, an area where the illumination ranges (c) of the plurality of illumination fixtures (1, 1A to 1F) overlap, the overlap area being different from the division areas (A to F).

## Patentansprüche

1. Beleuchtungssteuersystem (S) aufweisend:
eine Mehrzahl von Beleuchtungsvorrichtungen (1, 1A bis 1F), die jeweils eine spezifische Adresse aufweisen, wobei die Mehrzahl von Beleuchtungsvorrichtungen in der Lage ist, eine individuelle Dimmsteuerung entsprechend einem externen Lichtsteuersignal zu erfahren; und
eine Beleuchtungssteuerstation (2), die ein Bildgebungselement (211) aufweist und einen Bildgebungsbereich (b) vorgibt, um Beleuchtungsbereiche der Mehrzahl von Beleuchtungsvorrichtungen (1, 1A bis 1F) zu umfassen, wobei die Beleuchtungssteuerstation (2) eingerichtet ist zum
- Teilen eines durch das Bildgebungselement (211) aufgenommenen Bildes in eine Mehrzahl von Bereichen (A bis F), wobei die Mehrzahl von Bereichen in Bezug gesetzt wird mit den Beleuchtungsbereichen (c) der Beleuchtungsvorrichtungen (1, 1A bis 1F);
- Bestimmen, ob eine Person (4) präsent ist oder nicht auf einer Basis des aufgenommenen Bildes;
- Bestimmen eines Teilbereichs (A bis F), in dem die Person präsent ist, sobald eine Person detektiert wurde; und
- Durchführen der Dimmsteuerung einer Beleuchtungsvorrichtung (1, 1A bis 1F), die dem Teilbereich (A bis F) entspricht;
**dadurch gekennzeichnet, dass**
die Beleuchtungssteuerstation (2) mit dem Bildgebungselement (211) an der Decke eines Raumes angeordnet ist und das Bildgebungselement (211) dazu eingerichtet ist, den Aufnahmebereich in Draufsicht aufzunehmen;
wobei die Beleuchtungssteuerstation (2) einen Bewegungsbestimmungsteil (212) aufweist, der dazu eingerichtet ist, eine Pixelgruppe (P3) zu bestimmen, die eine in den Raum hereinkommende Person (4) darstellt basierend auf einem Differenzbild, das eine pixelbasierte Differenz zwischen Bilddaten eines Hintergrundbildes und aktuellen Bilddaten ist, die von dem Bildgebungssensor (211) gesendet werden, und die außerdem dazu eingerichtet ist, das Hintergrundbild periodisch in vorgegebenen Zeitintervallen zu aktualisieren;
wobei die Beleuchtungssteuerstation (2) einen Positionsbestimmungsteil (213) aufweist, der eingerichtet ist, um die Koordinaten der Pixelgruppe (P3), die die hereinkommende Person (4) charakterisiert, in dem Differenzbild zu bestimmen und zu bestimmen, dass die Person (4) unbewegt ist, wenn innerhalb einer vorgegebenen Zeitdauer die Koordinatenänderung geringer ist oder gleich einem spezifizierten Wert;
wobei die Beleuchtungssteuerstation (2) dazu eingerichtet ist, eine Funktion des Messens der Beleuchtungsintensitätsverteilung des aufgenommenen Bildes für jeden der Teilbereiche (A bis F) bereitzustellen; beim Detektieren einer Person (4) durchschnittliche Beleuchtungsintensitäten in den verbleibenden Teilbereichen (A bis F) unter Ausschluss des Teilbereichs zu berechnen, in dem die Person (4) präsent ist; und eine Regelung der jeweiligen Beleuchtungsvorrichtungen (1, 1A bis 1F) durchzuführen, so dass die mittleren Beleuchtungsintensitäten jeweils gleich sind wie vorher bestimmte Zielwerte.

2. Beleuchtungssteuersystem nach Anspruch 1, wobei die Beleuchtungssteuerstation (2) einen Bereich als einen Überlappungsbereich vorgibt, in den die Beleuchtungsbereiche (c) der Mehrzahl von Beleuchtungsvorrichtungen (1, 1A bis 1F) überlappen, wobei der Überlappungsbereich von den Teilbereichen (A bis F) verschieden ist.

## Revendications

1. Système de contrôle d'éclairage (S) comprenant :
une pluralité d'appareils d'éclairage (1, 1A à 1F) ayant chacun une adresse spécifique, la pluralité d'appareils d'éclairage pouvant être soumis individuellement à un contrôle de gradation de lumière, en fonction d'un signal de contrôle d'éclairage externe ; et
un terminal de contrôle d'éclairage (2) qui présente un élément de formation d'image (211) et définit une plage de formation d'image (b), de manière à inclure des plages d'éclairage de la pluralité d'appareils d'éclairage (1, 1A à 1F), sachant que
le terminal de contrôle d'éclairage (2) est adapté pour
- diviser une image formée par l'élément de formation d'image (211) en une pluralité de zones (A à F), en mettant la pluralité de zones respectivement en relation avec les plages d'éclairage (c) des appareils d'éclairage (A, 1A à 1F) ;
- déterminer si oui ou non une personne (4) est présente, sur la base de l'image formée ;
- déterminer une zone de division (A à F) où la personne est présente, suite à la détection d'une personne ; et
- réaliser le contrôle de gradation de la lumière d'un appareil d'éclairage (1, 1A à 1F) correspondant à la zone de division (A à F) ;
**caractérisé en ce que**
le terminal de contrôle d'éclairage (2), avec l'élément de formation d'image (211), est placé au plafond d'une pièce, et l'élément de formation d'image (211) est adapté pour représenter dans une vue de dessus la zone prise en image ;
le terminal de contrôle d'éclairage (2) contient une partie de détermination de mouvement (212) qui est adaptée pour déterminer un groupe de pixels (P3) représentant une personne (4) entrant dans la pièce, sur la base d'une image différentielle qui est une différence, basée sur des pixels, entre des données d'image d'une image de fond et les données d'image réelles transmises par le capteur d'image (211), et qui est en outre adapté pour mettre l'image de fond périodiquement à jour, à des intervalles de temps donnés ;
le terminal de contrôle d'éclairage (2) contient une partie de détermination de position (213) qui est adaptée pour déterminer, dans l'image différentielle, les coordonnées du groupe de pixels (P3) représentant la personne (4) qui entre, et pour déterminer que la personne (4) est immobile si, pendant un laps de temps défini, le changement de coordonnées est inférieur ou égal à une valeur spécifique ;
le terminal de contrôle d'éclairage (2) est adapté pour remplir une fonction de mesure de la répartition de l'intensité lumineuse de l'image formée pour chacune des zones de division (A à F) ; suite à la détection d'une personne (4), il calcule les intensités lumineuses moyennes respectivement dans les zones de division (A à F) restantes, en excluant la zone de division où la personne est présente (4) ; et il réalise le contrôle de rétroaction des appareils d'éclairage (1, 1A à 1F) respectifs, de manière à ce que les intensités lumineuses moyennes deviennent respectivement- égales à des valeurs cibles préalablement définies.

2. Système de contrôle d'éclairage selon la revendication 1, dans lequel
le terminal de contrôle d'éclairage (2) définit, en tant que zone de chevauchement, une zone où les plages d'éclairage (c) de la pluralité d'appareils d'éclairage (1, 1A à 1F) se chevauchent, la zone de chevauchement étant différente des zones de division (A à F).
